(19) Europäisches Patentamt
European Patent Office
Office européen des brevets

(11) **EP 3 182 190 A1**

(12) **EUROPEAN PATENT APPLICATION**

(43) Date of publication:
**21.06.2017 Bulletin 2017/25**

(21) Application number: **15460125.6**

(22) Date of filing: **20.12.2015**

(51) Int Cl.:
*G02B 27/09* (2006.01)   *G09F 9/33* (2006.01)
*G08G 1/095* (2006.01)   *F21V 5/04* (2006.01)
*G02B 19/00* (2006.01)   *F21W 111/02* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **17.12.2015 PL 41536415**

(71) Applicant: **Instytut Optyki Stosowanej
03-805 Warszawa (PL)**

(72) Inventors:
• **Kryszczynski, Tadeusz
01-034 Warszawa (PL)**
• **Mikucki, Jerzy
01-934 Warszawa (PL)**
• **Litwin, Dariusz
00-681 Warszawa (PL)**
• **Czyzewski, Adam
00-132 Warszawa (PL)**
• **Galas, Jacek
05-092 Lomianki (PL)**
• **Sitarek, Stefan
05-830 Nadarzyn (PL)**

(74) Representative: **Woznicki, Jerzy
Patent Attorney
Al. Niepodleglosci 222 kl. A lok. 20
00-663 Warszawa (PL)**

(54) **AN OPTICAL SYSTEM FOR DISTRIBUTION LIGHT FROM A SINGLE PIXEL OF THE VARIABLE-MESSAGE TRAFFIC SIGN**

(57)    The system contains a source of light in the form of a light emitting diode (LED) and a rod lens (1) with a square cross-section at the base, with a perimeter in the face part in the shape of a sharp-angled truncated cone, terminated in the vertex part with a flat circular surface, and the lens on its equilateral base has a 2nd degree convex aspheric circular perimeter surface. The source of light is a tri-colour light emitting diode (1), while the 2nd degree convex aspheric circular perimeter surface has a hyperboloid shape.

*Fig. 1*

**Description**

The subject of the invention is the optical system for distributing light from a single pixel of the variable-message traffic sign (VMS).

There are currently known variable-message traffic signs with a screen composed of rod lenses. Variable message signs (VMSs) as a source of light use colour or white light emitting diodes (LEDs) installed to the back panel of the board in the axis of the rod lenses. Light from a single pixel of the traffic sign has a fixed colour.

Patent specification EP 1179219 presents a modular optical system for traffic signs, comprising rod lenses with a convex light-emitting front surface and a set of uniformly spaced diodes. The lenses has a body square in its cross-section and a side length equalling the distance between the diodes. Once installed in the front panel, they form a modular screen of the sign. The optical system of a single pixel of the variable message signs has a complex structure being the reason for optical phantom effect caused by external source of light, e.g. sunlight.

Patent specification EP 2356374 presents also an optical system of an indicator board fitted with rod lenses with a polygon-shaped cross-section, in particular a square, hexagon or octagon that on the equilateral lens base has a circular-outline convex paraboloid part. The source of light is a monochromatic light emitting diode (LED), which makes it impossible to change the colour of light emitted from the pixel. In addition, the paraboloid surface has a weakened optical performance at the edges of the lens.

The purpose of the invention is to build an optical system for distributing light from a single pixel of the variable-message traffic sign without the above-mentioned drawbacks.

The optical system for distributing light from a single pixel of the variable-message traffic sign, containing a source of light in the form of a light emitting diode (LED) and rod lenses with the square cross-section at the base, with a perimeter in the face part in the shape of a sharp-angled truncated cone, terminated in the top part with a flat circular surface, and the lens on its equilateral base has a 2nd degree convex aspheric circular perimeter surface, according to the invention is characterised in that the source of light is a tri-colour light emitting diode (LED), the base of the first rod lens has an aspheric convex surface, while its 2nd degree convex aspheric circular perimeter surface has a hyperboloid shape.

The mutually related ratios of rod lens parameters to its focal include: vertex radius, lens thickness, the diameter of the aspheric surface, the diameter of a flat circular surface, the length of square cross-section side and the distance from the aspheric surface to the tri-colour light emitting diode, are selected from the preferable range in the following way:

- the ratio of vertex radius $R_0$ to focal $F$ of the rod lens ranges from 0.44 to 0.62, while the conic constant $k$ ranges from -1.10 to -1.35.
- the ratio of thickness $L$ of the rod lens within the optical axis to the lens focal ranges from 2.6 to 3.5.
- the ratio of distance $s$ from the aspheric surface of the rod lens to the lighting surface of the tri-colour light emitting diode ranges from 1.75 to 2.30;
- the ratio of diameter $D$ of the aspheric convex surface of the rod lens to the lens focal ranges from 1.45 to 1.65;
- the ratio of diameter $d$ of the flat circular surface to the focal of the rod lens ranges from 0.3 to 0.55;
- the ratio of the square cross-section side length $q$ to the focal of the rod lens ranges from 1.75 to 2.15.

The use of the tri-colour light emitting diode made it possible to change the colour of light emitted by a pixel providing a possibility to transit to white light as a result of colour mixing.

Thanks to giving the convex aspheric part of the rod lens the shape of hyperboloid and by selecting the rod lens shape parameter to focal ratio value from a preferable range, a good visibility of a pixel emitted by the variable-message traffic sign (VMS) with a plane angle of $\pm 15°$, colour independence of the viewing angle and a good degree of light utilisation was obtained. A drawback of the paraboloid part of the existing rod lens is its poorer light utilisation for higher light distribution angles. There is a considerable difference between the shape of paraboloid and hyperboloid surface. The latter features poorer optical performance at the lens edge, which is important for LEDs with a higher angle of light distribution, approximately 120 degrees, replacing the formerly used distribution of 30 degrees. In this case other lens shape parameters also need to be changed.

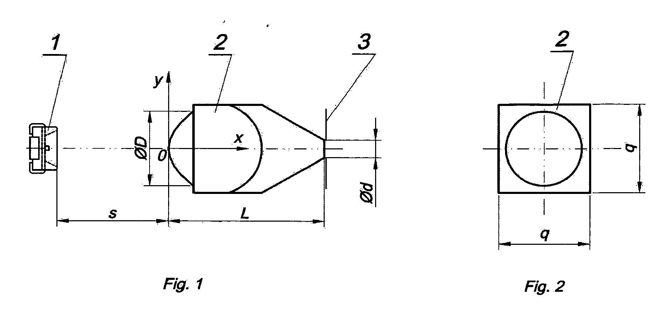

The subject of the invention is shown in the embodiment in the drawing, where Fig. 1 presents a schematic diagram of the optical system for light distribution from a single pixel of the variable-message traffic sign in side view, while Fig. 2 - the view of a rod lens from Fig. 1 from the base side.

The optical system presented in Fig. 1 comprises a source of light in the form of a tri-colour light emitting diode (LED) 1, the rod lens 2 with a square lens at the base, shown in Fig. 2, and aperture 3. The rod lens 2 in its face part has a rim in the shape of a sharp angled truncated cone terminated in the vertex part with a flat circular surface. The rod lens 2 on its equilateral base has a convex 2nd grade aspheric surface with a circular perimeter and a hyperboloid shape.

The dimensions in the figure mean as follows:

$s$ is a the distance from the aspheric surface of the rod lens 2 to the light surface of tri-colour light emitting diode,
$D$ is the diameter of the aspheric part of the rod lens 2,
$L$ is the thickness of the rod lens 2 in the optical axis,

*d* is the diameter of flat circular surface of the rod lens 2,

*q* is the length of the square cross-section side of rod lens 2.

The refractive index $n_d$ for the material of rod lens equals 1.5277, while its Abbe number $v_d$ is 56.

The axial focal F of the rod lens 2 is 5.67 mm. The vertex radius $R_0$ of the aspheric surface equals 3 mm from the preferable range of ratios of vertex radius to the *F* focal of the rod lens 2 ranging from 0.44 to 0.62. The conic constant *k* of a <u>hyperboloid</u> equals -1.2 from the range -1.1 to -1.35.

The shape contour of the aspheric surface of the rod lens 2 provides the following formula:

$$x = \cfrac{y^2}{R_0\left(1 + \sqrt{1 - (1+k)\left(\cfrac{y}{R_0}\right)^2}\right)}$$

where:

y is a transverse coordinate from the range from 0 to 4.2

x is a longitudinal coordinate

k is a conic constant.

Thicknesses *L* of the rod lens 2 in the optical axis equals 17.2 mm from the preferable range of thickness *L* ratio to focal *F* of the rod lens from 2.6 to 3.5.

Distance *s* from the aspheric surface of the second rod lens 2 to the lighting surface of the tri-colour light emitting diode 1 equals 12.1 mm from the preferable range of distance s to focal F of the rod lens 1.75 to 2.30.

Diameter *D* of the aspheric part surface of the rod lens equals 8.4 mm from the preferable ratios of the diameter *D* to focal *F* of the rod lens 2 ranging from 1.45 to 1.65.

Diameter *d* of the flat circular surface of the rod lens equals 2 mm from the preferable ratios of diameter *d* to focal *F* of the rod lens 2 ranging from 0.3 to 0.55.

The length of square cross-section side *q* of the optical system equals 10 mm from the preferable ratios of square side length *q* to focal *F* of the rod lens 2 ranging from 1.75 to 2.15.

**Claims**

1. An optical system for distributing light from a single pixel of the variable-message traffic sign, containing a source of light in the form of a light emitting diode (LED) and rod lenses with the square cross-section at the base, with a perimeter in the face part being in the shape of a sharp-angled truncated cone, terminated in the vertex part with a flat circular surface, and the lens on its equilateral base has a 2nd degree convex aspheric circular perimeter surface, **characterised in that** the source of light is a tri-colour light emitting diode (LED), the base of the first rod lens has an aspheric convex surface, while its 2nd degree convex aspheric circular perimeter surface has a hyperboloid shape.

2. The system according to claim 1, wherein the ratio of vertex radius $R_0$ to focal *F* of the rod lens (2) ranges from 0.44 to 0.62, while the conic constant *k* ranges from -1.10 to - 1.35.

3. The system according to claim 1, wherein the ratio of thickness *L* of the rod lens (2) within the optical axis to the lens focal ranges from 2.6 to 3.5.

4. The system according to claim 1, wherein the ratio of distance *s* from the aspheric surface of the rod lens (2) to the lighting surface of the tri-colour light emitting diode ranges from 1.75 to 2.30.

5. The system according to claim 1, wherein the ratio of diameter *D* of the aspheric surface of the rod lens (2) to the lens focal ranges from 1.45 to 1.65;

6. The system according to claim 1, wherein the ratio of diameter *d* of the flat circular surface to the focal of the rod lens ranges from 0.3 to 0.55.

7. The system according to claim 1, wherein the ratio of the square cross-section side length q to the focal of the rod lens ranges from 1.75 to 2.15.

Fig. 1

Fig. 2

Europäisches
Patentamt

European
Patent Office

Office européen
des brevets

# EUROPEAN SEARCH REPORT

Application Number

EP 15 46 0125

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 475 926 A1 (INST OPTYKI STOSOWANEJ [PL]; INST BADAWCZY DROG I MOSTOW [PL]) 18 July 2012 (2012-07-18) * paragraphs [0008], [0011], [0026], [0027]; figures 6,7 * | 1-7 | INV. G02B27/09 G09F9/33 G08G1/095 F21V5/04 G02B19/00 |
| X,D | EP 2 356 374 A1 (INST OPTYKI STOSOWANEJ [PL]; INST BADAWCZY DROG I MOSTOW [PL]) 17 August 2011 (2011-08-17) * paragraph [0012] - paragraph [0013]; figures 1,2 * | 1-7 | ADD. F21W111/02 |
| A | US 2015/325156 A1 (STADJUHAR ROBERT CHARLES [US]) 12 November 2015 (2015-11-12) * paragraphs [0023], [0026], [0042] * | 1 | |
| A | CN 202 306 120 U (SHENZHEN GLORY SKY OPTOELECTRONIC CO LTD) 4 July 2012 (2012-07-04) * paragraph [0023] * | 1 | |
| A | JP 2004 253477 A (STANLEY ELECTRIC CO LTD) 9 September 2004 (2004-09-09) * paragraph [0015]; figure 4 * | 1 | TECHNICAL FIELDS SEARCHED (IPC) G09F G08G G02B F21V F21Y F21W |
| A | US 2006/077661 A1 (ESCHBACH BERND [DE]) 13 April 2006 (2006-04-13) * paragraph [0024]; figure 1 * | 1 | |

The present search report has been drawn up for all claims

| Place of search | Date of completion of the search | Examiner |
|---|---|---|
| Munich | 5 April 2016 | Muller, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 46 0125

This annex lists the patent family members relating to the patent documents cited in  the above-mentioned European search report.
The members are as contained in the European Patent Office EDP file on
The European Patent Office is in no way liable for these particulars which are merely given for the purpose of information.

05-04-2016

| Patent document cited in search report | | | Publication date | Patent family member(s) | | | Publication date |
|---|---|---|---|---|---|---|---|
| EP 2475926 | A1 | | 18-07-2012 | EP<br>PL<br>UA<br>WO | 2475926<br>216006<br>101080<br>2011031170 | A1<br>B1<br>C2<br>A1 | 18-07-2012<br>28-02-2014<br>25-02-2013<br>17-03-2011 |
| EP 2356374 | A1 | | 17-08-2011 | EP<br>PL<br>UA<br>WO | 2356374<br>215189<br>99969<br>2010068127 | A1<br>B1<br>C2<br>A1 | 17-08-2011<br>29-11-2013<br>25-10-2012<br>17-06-2010 |
| US 2015325156 | A1 | | 12-11-2015 | NONE | | | |
| CN 202306120 | U | | 04-07-2012 | NONE | | | |
| JP 2004253477 | A | | 09-09-2004 | NONE | | | |
| US 2006077661 | A1 | | 13-04-2006 | AT<br>BR<br>EP<br>US | 354152<br>PI0504348<br>1643473<br>2006077661 | T<br>A<br>A1<br>A1 | 15-03-2007<br>09-05-2006<br>05-04-2006<br>13-04-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1179219 A

- EP 2356374 A